# EUROPEAN PATENT APPLICATION

(11) **EP 4 797 136 A1**
(43) Date of publication of application: **26.08.2026**
(21) Application number: 24890837.8
(22) Date of filing: 15.11.2024
(51) Int. Cl.: G06F 21/62

(54) **COMMUNICATION METHOD AND COMMUNICATION APPARATUS**

(30) Priority: 17.11.2023 CN 202311549758
(71) Applicant: HUAWEI TECHNOLOGIES CO., LTD., Shenzhen 518129 (CN)
(72) Inventor: WANG, Donghui, Shenzhen, Guangdong 518129 (CN); XIAO, Xun, Shenzhen, Guangdong 518129 (CN); SONG, Yurong, Shenzhen, Guangdong 518129 (CN); LIU, Fei, Shenzhen, Guangdong 518129 (CN)
(74) Representative: Grünecker Patent- und Rechtsanwälte PartG mbB
(86) International application number: PCT/CN2024/132443
(87) International publication number: WO 2025/103485

(57) **Abstract**

This application provides a communication method and a communication apparatus, allowing a user to obtain subscription or attestation services from a third party without direct contact with the third party. The communication method and the communication apparatus are applicable to communication systems. The communication method includes: obtaining, by a first node, first information from a blockchain node, where the first information indicates information about a subscription service or a first attestation service; and invoking, by the first node, the subscription service or the first attestation service and obtaining a corresponding service result.

## Description

This application claims priority to Chinese Patent Application No. 202311549758.6, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

If a user needs to subscribe to a service with an operator, the user must provide user information to the operator, and then the operator stores the subscription information in a subscriber identity module (subscriber identity module, SIM) card. SIM cards are not interoperable across different operators. If the user needs to obtain an attestation from an authoritative body, the user must provide identity information to an attestation body or organization and authenticate their identity in person at the authoritative body.

Therefore, in conventional technologies, barriers exist between different service providers (such as operators and attestation organizations or bodies). To obtain services from a service provider, a user must directly contact the service provider and submit their information, which limits application scenarios.

### SUMMARY

Embodiments of this application provide a communication method and a communication apparatus, enabling the transfer and circulation of user trust in an identity-centric manner, thereby allowing users to obtain subscription or attestation services from a service provider without directly contacting the service provider.

To achieve the foregoing objective, this application uses the following technical solutions.

According to a first aspect, a communication method is provided. The communication method includes: A first node obtains first information from a blockchain node. The first information indicates information about a subscription service or a first attestation service. The first node invokes the subscription service or the first attestation service and obtains a service result of the subscription service or the first attestation service.

Based on the method provided in the first aspect, the first node can obtain, from the blockchain, the information indicating the subscription service or the first attestation service, and invoke the subscription service or the first attestation service to obtain the service result. This can prevent a user from directly contacting an entity of an operator or a certification body or organization, thereby simplifying a procedure of using a service of the operator or the certification body or organization by the user. In addition, obtaining different services of different operators or bodies via the blockchain can improve trustworthiness and diversity of the obtained services.

In a possible implementation solution, the first information includes an address of the subscription service or the first attestation service. In this way, the first node can obtain or invoke the subscription service or the first attestation service.

In a possible implementation solution, the address of the subscription service or the first attestation service may be an address of a smart contract. That the first node invokes the subscription service or the first attestation service may include: The first node invokes the smart contract of the subscription service or the attestation service based on the address of the smart contract, and sends input information of the subscription service or the first attestation service to the blockchain node. Obtaining the service result of the subscription service or the first attestation service may include: receiving the service result of the subscription service or the first attestation service from a second node or the blockchain node. The service result of the subscription service or the first attestation service is obtained by inputting the input information of the subscription service or the first attestation service into the smart contract of the subscription service or the first attestation service. Because the smart contract is executed on the blockchain, an execution process of the smart contract can be verified. In this way, each blockchain node (or a blockchain node on which the smart contract is deployed) can verify the service result of the subscription service or the first attestation service, to ensure trustworthiness of the service result of the subscription service or the first attestation service.

In a possible implementation solution, the address of the subscription service or the first attestation service is an address of a website. That the first node invokes the subscription service or the first attestation service may include: The first node sends input information of the subscription service or the first attestation service to a second node based on the address of the website. Obtaining the service result of the subscription service or the first attestation service may include: receiving the service result of the subscription service or the first attestation service from the second node. The service result of the subscription service or the first attestation service is obtained by inputting the input information of the subscription service or the first attestation service into a smart contract of the subscription service or the first attestation service. In this way, the service result can be obtained in an existing manner, so that dependency on the blockchain can be reduced, and an application scenario is more flexible.

In a possible implementation solution, the input information of the subscription service or the first attestation service includes information indicating an identifier of the first node. In this way, the service result can be generated based on the identifier of the first node.

In a possible implementation solution, if the first information is information indicating a subscription service, the input information of the subscription service may further include second attestation information of the first node or a first address, where the second attestation information is a service result of a second attestation service, and the first address is a storage address of the second attestation information on the blockchain node. In this way, an identity of the user can be confirmed based on the second attestation information, making a subscription process more secure.

In a possible implementation solution, the service result of the subscription service or the first attestation service may include a correspondence between subscription information and the identifier of the first node or a correspondence between first attestation information and the identifier of the first node, the subscription information indicates a service that the first node has subscribed to, and the first attestation information is used to attest an identity of the first node. In this way, the user can complete subscription or certification, which provides a basis for subsequent services such as network services, QoS guarantee, identity authentication, historical tracing, and payment.

In a possible implementation solution, the identifier of the first node may include a first type of identifier of the first node or a subscription permanent identifier of the first node, and the first type of identifier indicates an identity of a user or the first type of identifier corresponds to an attribute of a user.

In a possible implementation solution, the first node stores information about a query contract, the query contract is a smart contract used to query information about another smart contract, based on the query contract, the first node invokes the query contract and sends input information of a query service to the blockchain node, and that the first node obtains the first information from the blockchain node may include: The first node obtains the first information from the blockchain node based on the information about the query contract. In this way, the user merely needs to store the information about the query contract, and can directly obtain information about another service via the query contract.

In a possible implementation solution, the information about the query contract may include an address of the query contract.

In a possible implementation solution, the blockchain node is a network element in a telecommunication network. In other words, a blockchain node exists in the telecommunication network, so that an operator corresponding to the telecommunication network can control and manage the blockchain node. In addition, a node in the telecommunication network can directly access the blockchain node to obtain data on the blockchain, for example, subscription data, thereby reducing an interaction procedure.

According to a second aspect, a communication method is provided. The communication method includes: A blockchain node obtains first information. The first information indicates information about a subscription service or a first attestation service. The blockchain node sends the first information to a first node.

Based on the communication method in the second aspect, the blockchain node can obtain the first information and provide the first information to the first node. Because the first information indicates the information about the subscription service or the first attestation service, the first node can invoke the subscription service or the first attestation service based on the first information and obtains a service result. This can prevent a user from directly contacting an entity of an operator or a certification body or organization, thereby simplifying a procedure of using a service of the operator or the certification body or organization by the user. In addition, obtaining different services of different operators or bodies via the blockchain can improve trustworthiness and diversity of the obtained services.

In a possible implementation solution, the first information may include an address of the subscription service or the first attestation service.

In a possible implementation solution, a smart contract of the subscription service or the first attestation service is deployed on the blockchain node, and the address of the subscription service or the first attestation service is an address of the smart contract.

In a possible implementation solution, the method provided in the second aspect may further include: The blockchain node receives input information of the subscription service or the first attestation service from the first node. The blockchain node obtains a service result of the subscription service or the first attestation service. The service result of the subscription service or the first attestation service is obtained by inputting the input information of the subscription service or the first attestation service into the smart contract of the subscription service or the first attestation service. The blockchain node provides the service result of the subscription service or the first attestation service to a second node.

In a possible implementation solution, the input information of the subscription service or the first attestation service includes information indicating an identifier of the first node.

In a possible implementation solution, if the first information is information indicating a subscription service, the input information of the subscription service may further include second attestation information of the first node or a first address, where the second attestation information is a service result of a second attestation service, and the first address is a storage address of the second attestation information on the blockchain node.

In a possible implementation solution, the service result of the subscription service or the first attestation service may include a correspondence between subscription information and the identifier of the first node or a correspondence between first attestation information and the identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

In a possible implementation solution, the address of the subscription service or the first attestation service is an address of a website, and the method provided in the second aspect may further include: The blockchain node receives a service result of the subscription service or the first attestation service and/or a hash value of the service result of the subscription service or the first attestation service.

In a possible implementation solution, the blockchain node is a network element in a telecommunication network.

For technical effects of the method provided in the second aspect, refer to technical effects of the method provided in the first aspect. Details are not described herein again.

According to a third aspect, a communication method is provided. The communication method includes: A second node receives a service result of a subscription service or a first attestation service from a blockchain node. The second node sends the service result of the subscription service or the first attestation service to a first node.

In a possible implementation solution, the service result of the subscription service or the first attestation service may include a correspondence between subscription information and an identifier of the first node or a correspondence between first attestation information and an identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

For technical effects of the method provided in the third aspect, refer to technical effects of the method provided in the first aspect. Details are not described herein again.

According to a fourth aspect, a communication method is provided. The communication method includes: A second node receives input information of a subscription service or a first attestation service. The second node obtains a service result of the subscription service or the first attestation service based on the input information of the subscription service or the first attestation service. The second node sends the service result of the subscription service or the first attestation service or the subscription service and/or a hash value of the service result of the first attestation service to a blockchain node, and/or the second node sends the service result of the subscription service or the first attestation service to a first node.

Based on the method provided in the fourth aspect, the second node can obtain the service result based on the input information of the subscription service or the first attestation service, and provide, for the blockchain node or the first node, information indicating the service result. An existing manner of obtaining the service result may be used, that is, a service provider obtains the service result, so that dependency on the blockchain can be reduced, and an application scenario is more flexible.

In a possible implementation solution, the service result of the subscription service or the first attestation service may include a correspondence between subscription information and an identifier of the first node or a correspondence between first attestation information and an identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

In a possible implementation solution, the blockchain node is a network element in a telecommunication network.

For technical effects of the method provided in the fourth aspect, refer to technical effects of the method provided in the first aspect. Details are not described herein again.

According to a fifth aspect, a communication method is provided. The communication method includes: A first node obtains first information. The first information indicates an address of a smart contract of a subscription service or a first attestation service. The first node invokes the subscription service or the first attestation service based on the address of the smart contract and obtains a service result of the subscription service or the first attestation service.

Based on the communication method provided in the fifth aspect, the first node can invoke the smart contract of the subscription service or the first attestation service based on the locally stored address of the smart contract of the subscription service or the first attestation service. In this way, the first node can invoke the subscription service or the first attestation service based on the first information and obtain the service result. In other words, the first node can prevent a user from directly contacting an entity of an operator or a certification body or organization, thereby simplifying a procedure of using a service of the operator or the certification body or organization by the user.

In addition, storing the first information locally can further reduce an interaction procedure and improve communication efficiency.

In a possible implementation solution, the first node stores the first information.

In a possible implementation solution, that the first node invokes the subscription service or the first attestation service based on the address of the smart contract may include: The first node sends input information of the subscription service or the first attestation service to a blockchain node based on the address of the smart contract.

In a possible implementation solution, obtaining the service result of the subscription service or the first attestation service includes: receiving the service result of the subscription service or the first attestation service from a second node or the blockchain node, where the service result of the subscription service or the first attestation service is obtained by inputting the input information of the subscription service or the first attestation service into the smart contract of the subscription service or the first attestation service.

In a possible implementation solution, the input information of the subscription service or the first attestation service includes information indicating an identifier of the first node.

In a possible implementation solution, if the first information is information indicating a subscription service, the input information of the subscription service further includes second attestation information of the first node or a first address, where the second attestation information is a service result of a second attestation service, and the first address is a storage address of the second attestation information on the blockchain node.

In a possible implementation solution, the service result of the subscription service or the first attestation service includes a correspondence between subscription information and the identifier of the first node or a correspondence between first attestation information and the identifier of the first node, the subscription information indicates a service that the first node has subscribed to, and the first attestation information is used to attest an identity of the first node.

In a possible implementation solution, the blockchain node is a network element in a telecommunication network.

According to a sixth aspect, a communication method is provided. The communication method includes: A blockchain node receives input information of a subscription service or a first attestation service. The blockchain node executes a smart contract of the subscription service or the first attestation service based on the input information of the subscription service or the first attestation service and obtains a service result of the subscription service or the first attestation service. The blockchain node provides the service result of the subscription service or the first attestation service to a first node.

In a possible implementation solution, if the input information of the subscription service or the first attestation service is the input information of the subscription service, the input information of the subscription service further includes second attestation information of the first node or a first address, where the second attestation information is a service result of a second attestation service, and the first address is a storage address of the second attestation information on the blockchain node.

In a possible implementation solution, the service result of the subscription service or the first attestation service includes a correspondence between subscription information and an identifier of the first node or a correspondence between first attestation information and an identifier of the first node, the subscription information indicates a service that the first node has subscribed to, and the first attestation information is used to attest an identity of the first node.

In a possible implementation solution, the method provided in the sixth aspect may further include: The blockchain node provides a service result of the subscription service or the first attestation service to a second node.

In a possible implementation solution, the blockchain node is a network element in a telecommunication network.

According to a seventh aspect, a communication apparatus is provided. The communication apparatus is configured to perform the communication method according to any one of the implementations of the first aspect to the sixth aspect.

In this application, the communication apparatus according to the seventh aspect may be the first node according to any one of the first aspect or the fifth aspect, the blockchain node according to any one of the second aspect or the sixth aspect, the second node according to any one of the third aspect or the fourth aspect, or a chip (system) or another component that may be disposed in the first node, the blockchain node, or the second node, or an apparatus including the first node, the blockchain node, or the second node.

It should be understood that the communication apparatus according to the seventh aspect includes a corresponding module, unit, or means (means) for implementing the communication method according to any one of the first aspect to the sixth aspect. The module, unit, or means may be implemented by hardware, may be implemented by software, or may be implemented by hardware executing corresponding software. The hardware or the software includes one or more modules or units configured to perform the functions in the foregoing communication method.

According to an eighth aspect, a communication apparatus is provided. The communication apparatus includes a processor, and the processor is configured to perform the communication method according to any one of the possible implementations of the first aspect to the sixth aspect.

In a possible implementation solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In a possible implementation solution, the processor may be coupled to a memory, and the processor is configured to execute a computer program stored in the memory, so that the communication apparatus performs the communication method according to any one of the possible implementations of the first aspect to the sixth aspect.

In a possible implementation solution, the communication apparatus according to the eighth aspect may further include the memory. The memory and the processor may be integrated together, or may be disposed separately. The memory may be configured to store a computer program and/or data related to the communication method according to any one of the first aspect to the sixth aspect.

In this application, the communication apparatus according to the eighth aspect may be the first node according to any one of the first aspect or the second aspect, the blockchain node according to any one of the second aspect or the sixth aspect, the second node according to any one of the third aspect or the fourth aspect, or a chip (system) or another component that may be disposed in the first node, the blockchain node, or the second node, or an apparatus including the first node, the blockchain node, or the second node.

According to a ninth aspect, a processor is provided. The processor is configured to perform the communication method according to any one of the possible implementations of the first aspect to the sixth aspect.

According to a tenth aspect, a communication system is provided. The communication system includes one or more first nodes, one or more blockchain nodes, and one or more second nodes.

In a possible implementation solution, the first node exchanges information with the blockchain node, and the second node may exchange information with the blockchain node. The first node and the second node may exchange information with each other.

In a possible implementation solution, the first node may be a terminal, and the second node may be a device corresponding to an operator, a device corresponding to a social authoritative body, or a device corresponding to another organization or body that can provide an attestation service.

According to an eleventh aspect, a computer-readable storage medium is provided, including a computer program or instructions. When the computer program or the instructions are run on a computer, the computer is enabled to perform the communication method according to any one of the possible implementations of the first aspect to the sixth aspect.

According to a twelfth aspect, a computer program product is provided, including a computer program or instructions. When the computer program or the instructions are run on a computer, the computer is enabled to perform the communication method according to any one of the possible implementations of the first aspect to the sixth aspect.

In addition, for technical effects of the communication apparatus in the seventh aspect to the twelfth aspect, refer to the technical effects of the communication method in the first aspect to the sixth aspect. Details are not described herein again.

### BRIEF DESCRIPTION OF DRAWINGS

FIG. 1 is a diagram of node information according to an embodiment of this application;
FIG. 2 is a diagram of storing node information in a blockchain system according to an embodiment of this application;
FIG. 3 is a diagram of an architecture of a communication system according to an embodiment of this application;
FIG. 4 is a schematic flowchart 1 of a communication method according to an embodiment of this application;
FIG. 5 is a schematic flowchart 1 of obtaining first information according to an embodiment of this application;
FIG. 6 is a schematic flowchart 2 of obtaining first information according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic flowchart 4 of a communication method according to an embodiment of this application;
FIG. 10 is a schematic flowchart 5 of a communication method according to an embodiment of this application;
FIG. 11 is a diagram of information exchange between a different device and a blockchain node according to an embodiment of this application;
FIG. 12 is a schematic flowchart 6 of a communication method according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a 5th generation (5th generation, 5G) mobile communication system, for example, a new radio (new radio, NR) system, and a communication system evolved after 5G, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or implementation solution described as an "example" in this application should not be construed as being more preferred or advantageous than other embodiments or implementation solutions. Exactly, the word "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences between the terms are not emphasized. "Of (of)", "corresponding, relevant (corresponding, relevant)", and "corresponding (corresponding)" may be interchangeably used sometimes. It should be noted that meanings expressed by the terms are consistent when differences between the terms are not emphasized.

In embodiments of this application, a subscript, for example, W₁, may sometimes be mistakenly written in a non-subscript form, for example, W1. Expressed meanings are consistent when differences are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may learn that: With the evolution of the network architecture and the emergence of new service scenarios, the technical solutions provided in embodiments of this application are also applicable to similar technical problems.

In some implementations, if a user needs to subscribe to a service with an operator, the user must provide user information to the operator, and the operator generates subscription information based on the user information and stores the subscription information in a subscriber identity module (subscriber identity module, SIM) card. SIM cards are not interoperable across different operators. If the user needs to obtain an attestation from an authoritative body, the user must provide identity information to an attestation body or organization and authenticate their identity in person at the authoritative body.

In the foregoing implementation, barriers exist between different service providers (such as operators and attestation organizations or bodies). To obtain services from a service provider, a user must directly contact the service provider and submit their information, which limits application scenarios.

In view of this, this application provides a communication method and a corresponding apparatus, enabling the transfer and circulation of user trust in an identity-centric manner, thereby allowing users to obtain subscription or attestation services from a service provider without directly contacting the service provider.

For ease of understanding, the following first describes technical terms in embodiments of this application.

An identifier of a node may be used to identify node information, and one node may include one or more identifiers. For example, the identifier of the node may include one or more of the following: a decentralized root credential (decentralized root credential, DRC) (which may also be referred to as a decentralized root trust credential), a decentralized identity credential (decentralized identity credential, DIC) (which may also be referred to as a decentralized identity trust credential), a decentralized self-control identity (decentralized self-control credential, DSCC), or a subscription permanent identifier (subscription permanent identifier, SUPI). The DRC, the DIC, and the DSCC may all be referred to as a self-control identity (self-control identity, scID).

In some possible embodiments, the identifier of the node may be information that is generated by a trusted node other than the node and used to identify the node. For example, if the node is a terminal and the identifier of the node is a DRC, the DRC may be generated by the trusted node other than the node, for example, a node corresponding to a SIM card manufacturer or a UICC card manufacturer, or generated by a terminal device manufacturer. For another example, if the node is a terminal and the identifier of the node is an SUPI, the SUPI may be generated by the trusted node other than the node, for example, a node corresponding to an operator. In some other possible embodiments, the identifier of the node may be information that is derived by the node based on a root credential and that is used to identify the node or identify an attribute corresponding to a first identifier of the node, for example, a DIC. In some other possible implementation solutions, the identifier of the node may be information that is independently generated by the node and that is used to identify the node or identify an attribute corresponding to a first identifier of the node, for example, a DSCC. In this way, different types of identifiers may be used based on different service scenarios. For example, in a service scenario that has a high requirement on confidentiality of personal information, the DIC may be used to complete a service. For another example, in a scenario that has a low trust requirement on a node, the DSCC may be used to complete a service. The SUPI may be used for communication between a node and a device of an operator.

Each identifier of the node may correspond to one piece of node information, and the node information may include the identifier of the node. In addition, the node information may include one or more of the following: credential information corresponding to the identifier of the node, service information corresponding to the identifier of the node, information indicating a type of a terminal, information about an issuer of the identifier of the node, or information indicating a disclosure condition of credential information corresponding to the identifier of the node. This can make content of the second information more flexible.

In an implementation solution, the credential information corresponding to the identifier of the node includes authentication information corresponding to the identifier of the node and/or attestation information corresponding to the identifier of the node, where the authentication information corresponding to the identifier of the node is used to verify a terminal, and the attestation information corresponding to the identifier of the node is used to verify an attribute corresponding to the identifier of the node.

In a possible implementation solution, the identifier of the node and the credential information corresponding to the identifier of the node are carried in identification information corresponding to the identifier of the node. In this case, the node information may further include profile information. The profile information includes one or more of the following: the service information corresponding to the identifier of the node, the information indicating a type of a terminal, the information about an issuer of the identifier of the node, or the information indicating a disclosure condition of credential information corresponding to the identifier of the node. Alternatively, the identifier of the node is carried in identification information corresponding to the identifier of the node, and one or more of the credential information corresponding to the identifier of the node, the service information corresponding to the identifier of the node, the information indicating a type of a terminal, the information about an issuer of the identifier of the node, or the information indicating a disclosure condition of credential information corresponding to the identifier of the node are carried in profile information corresponding to the identifier of the node.

It may be understood that in this embodiment of this application, the identifier of the node is merely used as an example. During actual implementation, the identifier of the node may be alternatively implemented in another manner. Details are not described herein again.

Node information describes information about a feature corresponding to a node, where the feature may be a feature of the node, a feature of a subject (subject) corresponding to the node, or information about a service that the node can provide. The node information may also be referred to as node information of a device corresponding to the node.

The subject corresponding to the node may be a physical entity, for example, the node itself. Alternatively, the subject corresponding to the node may be a unit formed according to logic, for example, a person, an organization, or an enterprise. The subject corresponding to the node enumerated herein is merely used as an example. During actual implementation, the subject corresponding to the node may alternatively be in another manner. Details are not described herein again.

One node may include one or more identifiers, and each identifier may correspond to one piece of node information. In other words, one piece of node information may include one or more pieces of node information.

If the node is a terminal, the node information may include one or more of the following: an organization issuing an identifier of the node, an identifier of the node, public key information corresponding to the identifier of the node, a verification algorithm, a validity period, and a revocation list. In addition, the node information may include information indicating a storage location of the node information in a blockchain, for example, a block height of the node information and/or a transaction identifier.

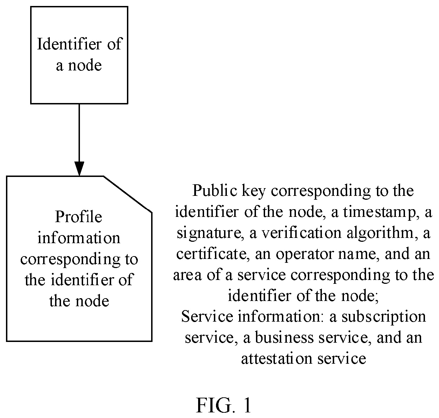

If the node is a device corresponding to an operator, as shown in FIG. 1, the node information may include the identifier of the node, namely, an identifier of the operator, and profile information corresponding to the identifier of the node. The profile information corresponding to the node may include the public key corresponding to the identifier of the node, the validity period, a signature, the verification algorithm, a certificate, and the like, a subject corresponding to the identifier of the node, for example, a name of the operator, and service information corresponding to a service area corresponding to the identifier of the node (namely, information about a service provided by the operator). The service information corresponding to the identifier of the node may include a subscription service, a business service, and an attestation service. The subscription service is used to provide users with service plan subscription or service registration. The business service is used to provide one or more of the following for users: bill inquiry, tariff inquiry, or location query.

Similarly, if the node is a device corresponding to a certification body or organization, an implementation principle of profile information corresponding to the identifier of the node is similar to that in FIG. 1, and an attestation service in profile information of a second node may be an identity attestation service.

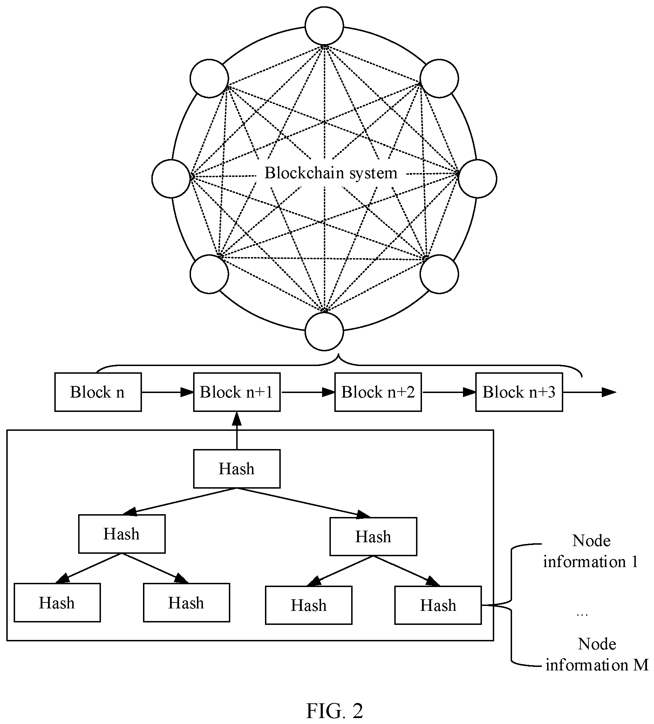

Each piece of node information may be stored in a blockchain node in a blockchain system in a blockchain manner. For example, as shown in FIG. 2, in node information 1 to node information M, a hashing operation is performed once based on a data block, a hashing operation is performed again on a plurality of results of a 1^{st} hashing operation to obtain a result of a 2^{nd} hashing operation, and a hashing operation is performed again on a plurality of results of the 2^{nd} hashing operation to obtain a result of a 3^{rd} hashing operation. In this way, the result of the 3^{rd} hashing operation may be stored in a block n+1. Similarly, another block may be obtained. It may be understood that a quantity of hashing times may be one or more times, and this is merely used as an example for description herein.

The following describes the technical solutions of this application with reference to the accompanying drawings.

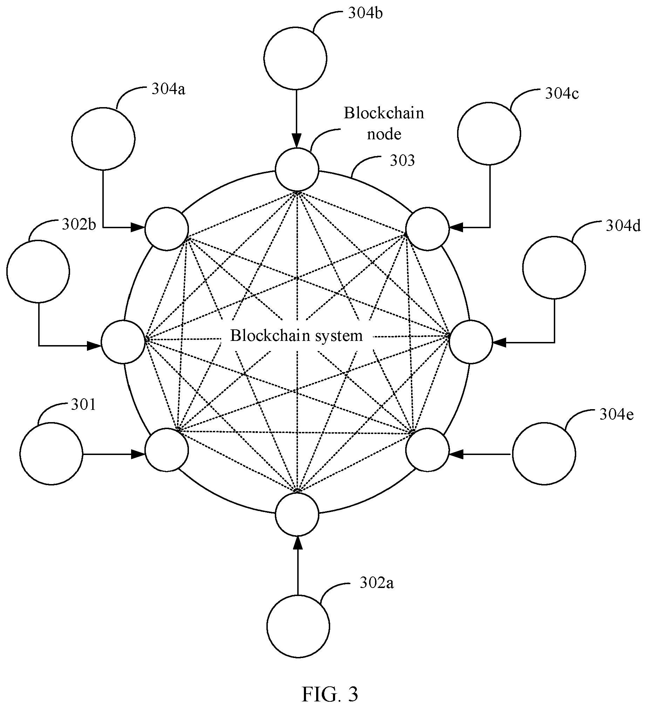

For ease of understanding embodiments of this application, a communication system shown in FIG. 3 is first used as an example to describe in detail a communication system applicable to embodiments of this application. For example, FIG. 3 is a diagram of an architecture of a communication system to which a communication method according to an embodiment of this application is applicable.

As shown in FIG. 3, the communication system includes a first node 301, second nodes (a second node 302a and/or a second node 302b), and a blockchain system 303.

The first node 301 may be, for example, a terminal or a network device.

The second node may be a network device. In some possible implementations, the second node may be a device corresponding to an operator, a device corresponding to an authoritative body, or a device corresponding to another organization or body that can provide an attestation service.

The blockchain system 303 may include a blockchain node. The blockchain node may be a terminal or a network device.

The first node 301 may exchange information with the second nodes (the second node 302a and the second node 302b), and the first node 301 may exchange information with the blockchain system 303. In other words, the first node 301 may exchange information with at least some blockchain nodes in the blockchain system 303. The second nodes (the second node 302a and the second node 302b) may exchange information with the blockchain system 303. In other words, the second nodes (the second node 302a and the second node 302b) may exchange information with at least some blockchain nodes in the blockchain system 303.

In addition, the blockchain system may include other nodes, for example, third nodes (a third node 304a to a third node 304e).

The third nodes (the third node 304a to the third node 304e) may exchange information with at least some blockchain nodes in the blockchain system 303. The third node may be a terminal, a device corresponding to a network device card manufacturer or a terminal manufacturer, an over-the-air provisioning server, or a device corresponding to another organization or body.

The device corresponding to a card manufacturer or a terminal manufacturer may be a device configured to implement a service of a card manufacturer or a terminal manufacturer, for example, a provisioning device of the card manufacturer or the terminal manufacturer.

The device corresponding to another organization or body is a device configured to implement a service of an organization or a body.

The device corresponding to an operator is a device configured to provide a service of the operator, for example, a server of the operator, a network element in a core network, or an access network device.

The device corresponding to an authoritative body is a device that can be used to provide a service of an authoritative body, for example, a server or a host of the authoritative body. The social authoritative body may provide an attestation service for one or more types of identity information.

The terminal is a terminal that accesses the communication system and has a transceiver function, a chip or a chip system that can be disposed in the terminal, or a unit or module that has a terminal function. The terminal may also be referred to as a terminal device, user equipment (user equipment, UE), a mobile station (mobile station, MS), a mobile terminal (mobile terminal, MT), or the like, or is a device that is configured to provide voice or data connectivity for a user, or may be an internet of things device. For example, the terminal includes a hand-held device, a vehicle-mounted device, or the like that has a wireless connection function. Currently, the terminal may be a mobile phone, a tablet computer, a notebook computer, a palmtop computer, a mobile internet device (mobile internet device, MID), a wearable device (for example, a smart watch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. Alternatively, the terminal may be a vehicle apparatus, for example, an entire vehicle apparatus, an in-vehicle module, an in-vehicle chip, an on board unit (on board unit, OBU), or a telematics box (telematics box, T-BOX). Alternatively, the terminal may be another device that has a terminal function. For example, the terminal may be a device that functions as a terminal in D2D communication.

The terminal in this application may alternatively be a module or a unit that can be configured to implement a function of the terminal. For example, the terminal may alternatively be a universal integrated circuit card (universal integrated circuit card, UICC) or a blockchain universal integrated circuit card (blockchain UICC, B-UICC).

A device form of the terminal is not limited in embodiments of this application. An apparatus configured to implement a function of the terminal may be a terminal device, or may be an apparatus that can support the terminal in implementing the function, for example, a chip system. The apparatus may be mounted in the terminal or used in cooperation with the terminal. In this embodiment of this application, the chip system may include a chip, or may include a chip and another discrete component.

In a possible scenario, the network device may be a base station (base station), an evolved NodeB (evolved NodeB, eNodeB), a transmission reception point (transmission reception point, TRP), a transmission point (transmission point, TP), a next generation NodeB (next generation NodeB, gNB), a next generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station, a micro base station, an indoor base station, a relay node, a donor node, or a radio controller in a cloud radio access network (cloud radio access network, CRAN) scenario. The network device may alternatively be a device with a base station function in device to device (device to device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of network devices collaborate to assist the terminal in implementing radio access, and different network devices respectively implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in a radio access network (radio access network, RAN), or may be classified as a network device in a core network (core network, CN). This is not limited herein.

In different systems, the CU (or the CU-CP and the CU-UP), the DU, or the RU may also have different names, but a person skilled in the art may understand meanings thereof. For example, in an open RAN (open RAN, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In another possible scenario, the network device may alternatively be a network element or a device in a core network.

In some possible scenarios, the network device may be a network element or a device in a wired network, for example, a server.

A form of the network device is not limited in embodiments of this application. An apparatus configured to implement a function of the network device may be a network device, or may be an apparatus that can support the network device in implementing the function, for example, a chip system. The apparatus may be mounted in the network device or used in cooperation with the network device.

It should be understood that the node in this embodiment of this application is merely used as an example. During actual implementation, the node in this embodiment of this application may alternatively be a device corresponding to another organization or body. Details are not described herein again.

It should be understood that the blockchain system in this embodiment of this application may include a plurality of electronic devices, and the distributed system in this embodiment of this application may include a plurality of electronic devices.

It should be noted that the communication method provided in this embodiment of this application is applicable to nodes shown in FIG. 3. For a specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 3 is merely a simplified diagram of an example for ease of understanding. The communication system may further include another node that is not shown in FIG. 3.

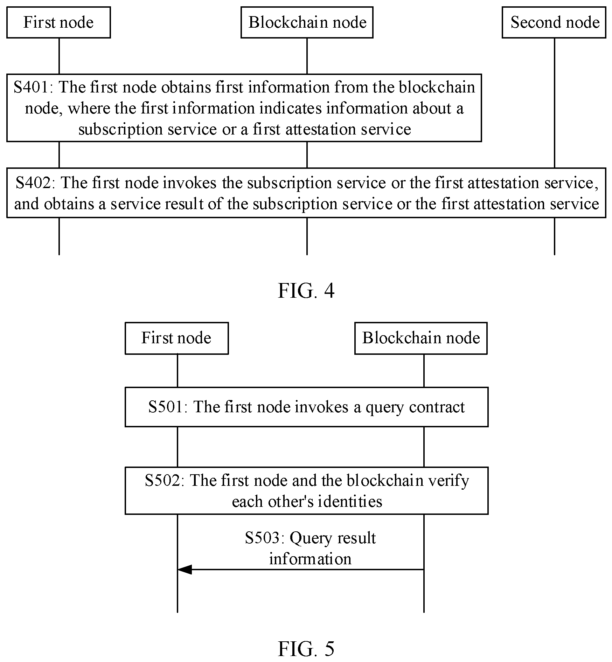

The following describes in detail, with reference to FIG. 4 to FIG. 11, a communication method provided in embodiments of this application.

For example, FIG. 4 is a schematic flowchart 1 of a communication method according to an embodiment of this application. The communication method is applicable to communication between any two nodes shown in FIG. 3.

As shown in FIG. 4, the communication method includes the following steps.

S401: A first node obtains first information from a blockchain node.

The first information indicates information about a subscription (subscription) service or a first attestation service.

The first node may be a node that needs to obtain a service. For a specific implementation, refer to related descriptions in the communication system provided in FIG. 3.

The blockchain node is one or more nodes that are in a blockchain system and that can exchange information with a terminal. In some possible implementation solutions, the first node stores information about the blockchain node that is in the blockchain system and that can exchange information with the first node, or information that is about the blockchain node and that can be accessed by the first node, for example, an identifier or an internet protocol (internet protocol, IP) address that is of the blockchain node and that can be accessed by the first node.

In a possible implementation solution, the blockchain node may be a network element in a telecommunication network. For example, the blockchain node may be a unified data repository (unified data repository, UDR) network element in a core network. It may be understood that the UDR network element is merely used as an example. During actual implementation, the network element may be another network element that may be configured to store data of a device external to the telecommunication network and support data reading by the device external to the telecommunication network. In other words, a blockchain node exists in the telecommunication network, so that an operator corresponding to the telecommunication network can control and manage the blockchain node. In addition, a node in the telecommunication network can directly access the blockchain node to obtain data on the blockchain, for example, subscription data, thereby reducing an interaction procedure.

The blockchain node stores node information of a plurality of nodes, including an identifier of each node and profile (profile) information corresponding to the identifier. The plurality of nodes may include the first node and a second node. The profile information of the first node may include information used to verify an identity of the first node. It may be understood that the identity of the first node may be verified by verifying the identifier of the first node. The profile information of the second node may include service information provided by the second node.

For an implementation of the node information of the node, refer to related descriptions in the technical terms.

It may be understood that, for a same node, there may be a plurality of identifiers, and each identifier may correspond to one piece of profile information.

The subscription service is a service used to implement a subscription function, for example, a service used for subscription between a user and an operator. The first attestation service is a service used to attest an identity or an attribute of the user. It may be understood that in this embodiment of this application, the subscription service may alternatively be another name, for example, may also be referred to as a subscription service, a purchase service, or a registration service.

In a possible implementation solution, the first information includes an address of the subscription service or the first attestation service. In other words, the first information may indicate the subscription service or the first attestation service via the address of the subscription service or the first attestation service. In this way, the first node can obtain or invoke the subscription service or the first attestation service.

When the first information indicates the information about the subscription service, the first information includes the address of the subscription service. When the first information indicates the first attestation service, the first information includes the address of the first attestation.

In a possible implementation solution, the address of the subscription service or the first attestation service may be an address of a smart contract or an address of a website.

In a possible implementation solution, the first node stores information about a query contract. In this case, S401 may include that the first node obtains the first information from the blockchain node based on the information about the query contract. In this way, the user merely needs to store the information about the query contract, and can obtain information about another service via the query contract. The query contract is a smart contract, and may be used to query another smart contract.

In a possible implementation solution, the information about the query contract may include an address of the query contract. The address of the query contract may be a storage location of the query contract on the blockchain. In some scenarios, the address of the query contract may also be referred to as an identifier of the query contract.

It may be understood that the information about the query contract may further include one or more of the following: a name of the query contract, a type of the contract (used to identify whether a smart contract is a query contract or a contract used to implement a service, for example, a subscription service or an attestation service), input information (an input parameter) of the query contract, and an invocation address of the query contract.

If the address of the subscription service or the first attestation service is an address of the smart contract, for an implementation principle in which the first node obtains the first information from the blockchain node based on the information about the query contract, refer to related descriptions in the following design 1. If the address of the subscription service or the first attestation service is an address of a website, for an implementation principle in which the first node obtains the first information from the blockchain node based on the information about the query contract, refer to related descriptions in the following design 2. Details are not described herein again.

In a possible implementation solution, the first node further stores node information of the first node.

In a possible implementation solution, the first node further stores certificate information of the blockchain node in the blockchain system. The certificate information of the blockchain node may be used to verify whether the blockchain node is valid, or is used to authenticate the blockchain node. The certificate information of the blockchain node may include a public key corresponding to the blockchain node, a validity period, a verification algorithm, and the like.

In a possible implementation solution, the first node further stores information about an over-the-air provisioning server.

The over-the-air provisioning server may be an independent server, a server cluster, or a distributed server system, and may be configured to communicate with a terminal (including a UICC), to write information into the UICC. Alternatively, the over-the-air provisioning server may be a device in an operator network. For example, the over-the-air provisioning server may be a device in a management plane network element, a control plane network element, or an operation and maintenance center. Alternatively, the over-the-air provisioning server may be a device of a card manufacturer or a device manufacturer.

The information about the over-the-air provisioning server may include information used to identify the over-the-air provisioning server, for example, an address and/or an identifier of the over-the-air provisioning server. The over-the-air provisioning server may also be information used to verify an identity of the over-the-air provisioning server, for example, one or more of the following: a public key, a trust root, a root certificate, or a certificate.

S402: The first node invokes the subscription service or the first attestation service and obtains a service result of the subscription service or the first attestation service.

The service result of the subscription service or the first attestation service includes a correspondence between subscription information and the identifier of the first node or a correspondence between first attestation information and the identifier of the first node, the subscription information indicates a service that the first node has subscribed to, and the first attestation information is used to attest the identity of the first node.

The service result of the subscription service or the first attestation service may further include authentication information that is of the identifier of the first node and that is generated by the operator, where the authentication information is used to verify an identity of the terminal, and the authentication information includes certificate information of the first node. The certificate information includes a public key of the first node, a validity period, and the like. The certificate is signed with the operator's private key.

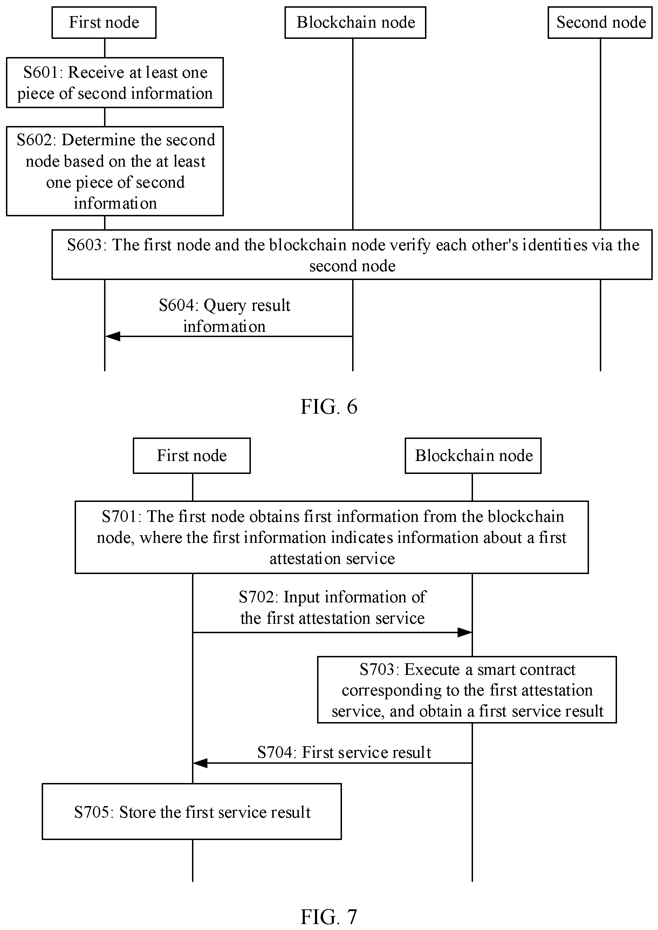

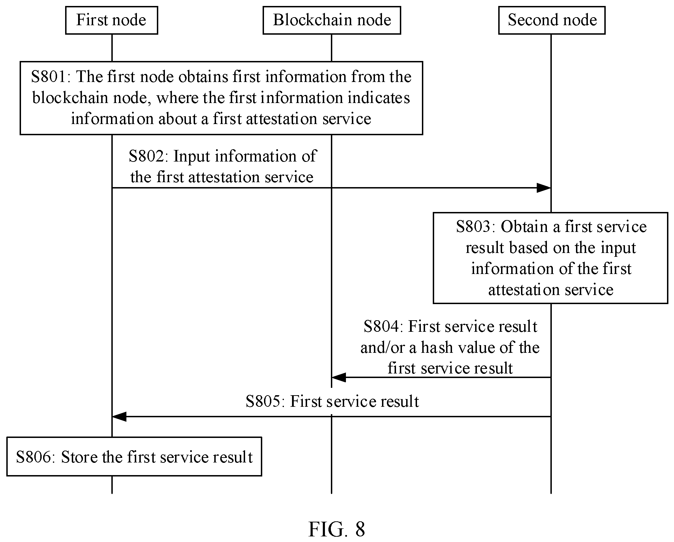

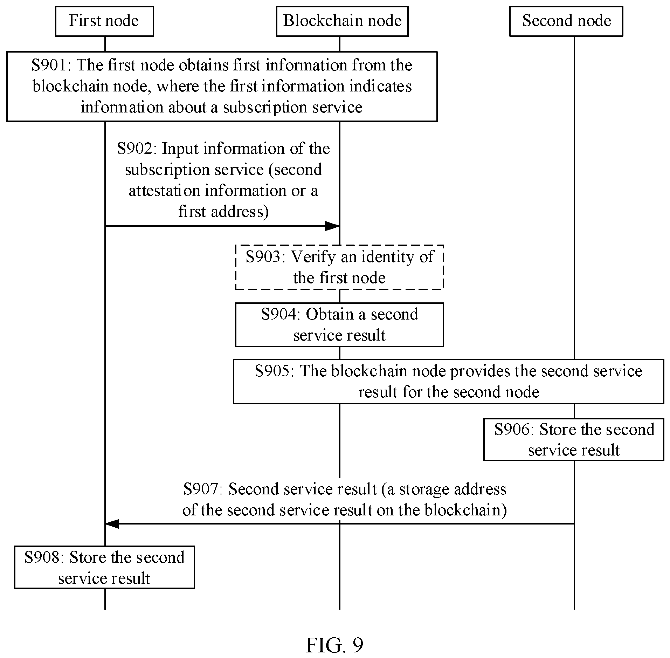

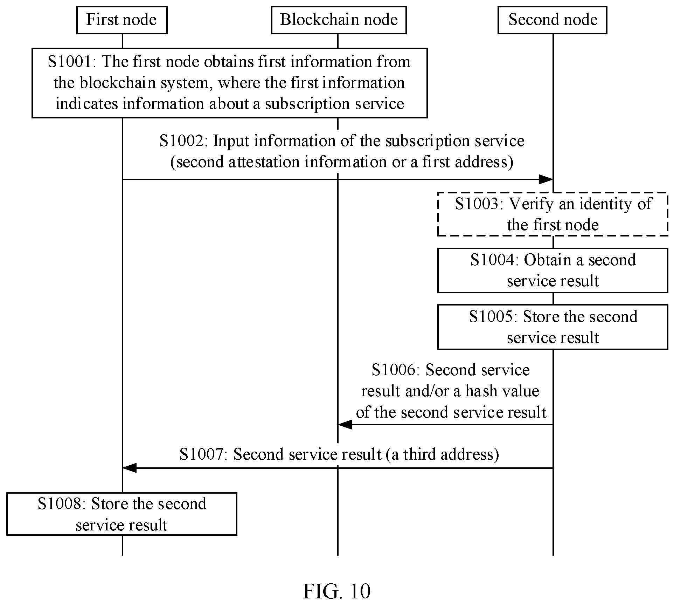

For an implementation principle of S402, refer to related descriptions in S702 to S705 in the method provided in FIG. 7, or related descriptions in S802 to S806 in the method provided in FIG. 8, or related descriptions in S902 to S908 in the method provided in FIG. 9, or related descriptions in S1002 to S1008 in the method provided in FIG. 10. Details are not described herein again.

Based on the method provided in FIG. 4, the first node can obtain, from the blockchain, the information indicating the subscription service or the first attestation service, and invoke the subscription service or the first attestation service to obtain the service result. This can prevent the user from directly contacting an entity of the operator or a certification body or organization, thereby simplifying a procedure of using a service of the operator or the certification body or organization by the user. In addition, obtaining different services of different operators or bodies via the blockchain can improve trustworthiness and diversity of the obtained services.

### Design 1

As shown in FIG. 5, that the first node obtains the first information from the blockchain node based on the information about the query contract may include S501 to S503.

S501: The first node invokes the query contract.

The first node sends the address of the query contract to the blockchain system. After receiving the address of the query contract, the blockchain determines a type of the input information of the query contract based on the address of the query contract, and sends information indicating the type of the input information of the query contract. The first node receives the information indicating the type of the input information of the query contract, and obtains the input information of the query contract based on the type of the input information of the query contract. The input information of the query contract is information corresponding to the type of the input information of the query contract. The first node sends the input information of the query contract. Correspondingly, the blockchain node receives the input information of the query contract. In this way, the blockchain node can execute a smart contract corresponding to the query contract and obtain a service result of the query contract, namely, information indicating the first information.

S502: The first node and the blockchain node verify each other's identities.

S502 may also be referred to as that the first node and the blockchain node perform mutual authentication.

In a possible implementation solution, S502 may include: The blockchain verifies the first node, and the first node verifies the blockchain node.

The blockchain node may verify the first node in Manner 1 or Manner 2 below.

Manner 1: The first node sends the certificate and a signature of the node to the blockchain node. The blockchain node verifies the signature information based on the certificate.

Manner 2: The first node sends the identifier and a signature of the node to the blockchain node, and the blockchain node obtains the certificate corresponding to the identifier, and then verifies the signature by using the certificate.

The first node may verify the blockchain node in Manner 3 or Manner 4 below.

Manner 3: The first node stores information used to verify the blockchain node, for example, a root certificate of the blockchain system. The blockchain node sends the certificate and a signature of the node to the first node. The first node uses the root certificate of the system to verify the certificate of the node, and then uses the certificate of the node to verify the signature.

Manner 4: The first node stores information used to verify the blockchain node, for example, a certificate of the blockchain node. The blockchain node sends a signature of the node to the first node. The first node verifies the signature by using the certificate of the node. The first node may send a first identifier of the first node to the blockchain node. The blockchain node may obtain, from the blockchain system, profile information corresponding to the first identifier. The profile information includes information used to verify the first node, for example, the certificate of the first node. The blockchain node may verify the first node based on the certificate of the first node.

The first node stores the information used to verify the blockchain node, for example, the certificate of the blockchain node. The blockchain node may provide (for example, directly send, or provide, by using a consensus mechanism) a second identifier of the blockchain node for the first node. The first node may determine, based on the stored certificate of the blockchain node, a certificate corresponding to the second identifier, to verify the blockchain node.

In S502, if identity verification of the first node succeeds and identity verification of the blockchain node succeeds, bidirectional communication may be established between the first node and the blockchain node.

S503: The blockchain node provides (for example, directly sends, or provides, by using a consensus mechanism) query result information for the first node.

The query result information includes the first information.

It should be understood that S503 may be performed when mutual verification between the first node and the blockchain node in S502 succeeds.

For example, the first information may be profile (profile) information corresponding to an operator. The profile information includes the first information.

### Design 2

As shown in FIG. 6, that the first node obtains the first information from the blockchain node based on the information about the query contract may include S601 to S604.

S601: The first node receives at least one piece of second information.

The second information may be broadcast information. Each piece of second information in the at least one piece of second information corresponds to one access device of an operator, or each piece of first information in the at least one piece of second information is sent by one access network device of an operator. In other words, the first node receives one or more pieces of second information broadcast by one or more access network devices.

S602: The first node determines the second node based on the at least one piece of second information.

The first node may determine, from the information broadcast by the access network device, a spectrum used by the operator (an access network device corresponding to the operator) for communication. The first node may select, as the second node based on a frequency band (referred to as a first frequency band) used by the first node for communication, an access network device whose frequency band used for communication includes the first frequency band.

S603: The first node and the blockchain node verify each other's identities via the second node.

For an implementation principle of S603, refer to related descriptions in S502. A difference between S603 and S502 lies in that information exchange between the first node and the blockchain node is forwarded via the second node.

S604: The blockchain node provides query result information for the first node.

For an implementation principle of the query result information, refer to related descriptions in S503 in Design 1. Details are not described herein again.

To facilitate understanding of the communication method provided in embodiments of this application, the communication method provided in FIG. 4 is described below with reference to different scenarios.

FIG. 7 is a schematic flowchart 2 of a communication method according to an embodiment of this application. In a scenario shown in FIG. 7, a first node may be a node corresponding to a terminal, and a second node may be a node corresponding to a body or an organization that provides an attestation service. In other words, a service that the first node needs to obtain is an attestation service, for example, a first attestation service, and an address of the attestation service is an address of a smart contract. In this case, the communication method shown in FIG. 7 includes the following steps.

S701: The first node obtains first information from a blockchain node.

The first information indicates information about the first attestation service. For an implementation principle of the first information, refer to related descriptions in S401 in the method provided in FIG. 4. For an implementation principle of S701, refer to related descriptions in S401 in the method provided in FIG. 4. Details are not described herein again.

S702: The first node sends input information of the first attestation service. Correspondingly, the blockchain node receives the input information of the first attestation service.

In a possible implementation solution, the input information of the first attestation service may include information indicating an identifier of the first node. In this way, the service result can be generated based on the identifier of the first node.

In a possible implementation solution, the identifier that is of the first node and that is indicated by the input information of the first attestation service indicates an identity of a user, or the identifier of the first node corresponds to an attribute of a user. For example, the identifier of the first node may be a DRC, a DIC, or a DSCC.

In a possible implementation solution, the input information of the first attestation service may be obtained in the following manner: The first node sends, to a blockchain system, an address of the first attestation service, namely, an address of a smart contract of the first attestation service. After receiving the address of the smart contract of the first attestation service, the blockchain determines a type of the input information of the first attestation service based on the address of the smart contract of the first attestation service, and sends information indicating the type of the input information of the first attestation service. The first node receives the information indicating the type of the input information of the first attestation service, and obtains the input information of the first attestation service based on the type of the input information of the first attestation service. The input information of the first attestation service is information corresponding to the type of the input information of the first attestation service.

In a possible implementation solution, the input information of the first attestation service may be provided by a user. For example, the input information of the first attestation service may be input by the user to the first node.

S703: The blockchain node executes the smart contract corresponding to the first attestation service and obtains the service result of the first attestation service, namely, a first service result.

In this case, the service result of the subscription service or the first attestation service in the method provided in FIG. 4 is the first service result.

The first service result includes a correspondence between first attestation information and the identifier of the first node, and the first attestation information is information used to attest an identity of the first node. It may be understood that the identifier of the first node in the first service result may be a first type of identifier of the first node or an SUPI of the first node. The SUPI of the first node is generated by an operator. In this way, the user can complete subscription or certification, which provides a basis for subsequent services such as network services, QoS guarantee, identity authentication, historical tracing, and payment.

It may be understood that the blockchain system may further store the first service result. Alternatively, the blockchain system may store a hash value of the first service result.

S704: The blockchain node provides the first service result for the first node.

In a possible implementation solution, the blockchain node may directly communicate with the first node, and the blockchain node may directly send the first service result to the first node.

In a possible design solution, the first node may be a node on a blockchain. In this case, the blockchain node may provide the first service result for the first node by using a blockchain consensus mechanism.

In a possible implementation solution, the first node is connected to the blockchain node via another node, for example, the second node. In this case, S704 may include: The blockchain node forwards the first service result to the first node via the another node connected to the first node, for example, the second node.

It may be understood that S704 may further include: The blockchain node provides a storage address of the first service result on the blockchain for the first node.

It may be understood that the storage address of the service result of the first attestation service on the blockchain and the service result of the first attestation service may be carried in a same message, or may be separately carried in different messages.

S705: The first node stores the first service result.

In a possible implementation solution, the first node may store the first attestation information in information corresponding to the identifier of the first node, for example, profile (profile) information. The information corresponding to the identifier of the first node includes the identifier of the first node.

It may be understood that if the blockchain node further provides the storage address of the first service result on the blockchain for the first node in S704, S705 may include: The first node stores the first service result when the first node verifies that the first service result is correct.

It should be understood that in this embodiment of this application, the first node may include one or more identifiers, and each identifier of the first node may carry one identity. The first attestation information is stored in the profile information of the identifier that is of the first node and that corresponds to the first attestation information.

Optionally, S704 includes: The first node may verify the received first service result via the blockchain when the blockchain node provides the storage address of the first service result on the blockchain for the first node. For example, the first node may obtain the hash value of the first service result from the blockchain, and calculate a hash value based on the service result received by the first node from the blockchain node. If the hash value obtained from the blockchain is the same as the hash value calculated by the first node, it may be determined that the first service result received by the first node is successfully verified. If the hash value obtained from the blockchain is inconsistent with the hash value calculated by the first node, it may be determined that the first service result received by the first node fails to be verified.

In a possible implementation solution, S704 and S705 may be understood as a process in which the blockchain node writes card data into the first node via an over-the-air provisioning server. In other words, the over-the-air provisioning server may be configured to forward information exchanged between the blockchain node and the first node. The over-the-air provisioning server writes the first attestation information into the profile information corresponding to the identifier of the first node.

For technical effects of the communication method provided in FIG. 7, refer to technical effects of the method provided in FIG. 4. In addition, because the smart contract is executed on the blockchain, an execution process of the smart contract can be verified. In this way, each blockchain node (or a blockchain node on which the smart contract is deployed) can verify the service result of the first attestation service, to ensure trustworthiness of the service result of the subscription service or the first attestation service.

FIG. 8 is a schematic flowchart 3 of a communication method according to an embodiment of this application. In a scenario shown in FIG. 8, a first node may be a node corresponding to a terminal, a service that the first node needs to obtain is an attestation service, for example, a first attestation service, and an address of the attestation service is an address of a website. In this case, a second node may be a node corresponding to a body or an organization that provides an attestation service. The communication method shown in FIG. 8 may include the following steps.

S801: The first node obtains first information from a blockchain node.

The first information indicates information about the first attestation service. For an implementation principle of the first information, refer to related descriptions in S401 in the method provided in FIG. 4. For an implementation principle of S801, refer to related descriptions in S401 in the method provided in FIG. 4. Details are not described herein again.

S802: The first node sends input information of the first attestation service. Correspondingly, the second node receives the input information of the first attestation service.

In a possible implementation solution, the input information of the first attestation service may be obtained in the following manner: The first node sends, to the second node, an address of the first attestation service, namely, an address of a website of the first attestation service. After receiving the address of the website of the first attestation service, the second node determines a type of the input information of the first attestation service based on the address of the website of the first attestation service, and sends information indicating the type of the input information of the first attestation service. The first node receives the information indicating the type of the input information of the first attestation service, and obtains the input information of the first attestation service based on the type of the input information of the first attestation service. The input information of the first attestation service is information corresponding to the type of the input information of the first attestation service.

In a possible implementation solution, the input information of the first attestation service may be provided by a user. For example, the input information of the first attestation service may be input by the user to the first node.

S803: The second node obtains a service result of the first attestation service, namely, a first service result, based on the input information of the first attestation service.

In this case, the service result of the subscription service or the first attestation service in the method provided in FIG. 4 is the first service result. For an implementation principle of the first service result, refer to related descriptions in S703 in the method provided in FIG. 7. Details are not described herein again.

In a possible implementation solution, the second node may input the input information of the first attestation into the first attestation service and obtain the first service result.

In a possible implementation solution, the second node may further store the first service result. For example, the second node may locally store the first service result.

S804: The second node sends the first service result and/or a hash value of the first service result to the blockchain node. Correspondingly, the blockchain node receives the first service result and/or the hash value of the first service result.

After S804, the blockchain node may further store the first service result and/or the hash value of the first service result.

In this way, the first node may obtain the first service result, the hash value of the first service result, or both that are stored on the blockchain node, and verify, based on the first service result, the hash value of the first service result, or both that are stored on the blockchain node, the service result received by the first node.

S805: The second node sends the first service result.

It may be understood that S805 may further include: The second node sends a second address. Correspondingly, the first node receives the second address. The second address is a storage address of the first service result on the blockchain or a storage address of the hash value of the first service result on the blockchain. That is, the second node sends the second address to the first node. The second address may be provided for the second node after the blockchain stores the first service result and/or the hash value of the first service result.

It may be understood that the second address and the first service result may be carried in a same message, or may be separately carried in different messages.

In a possible implementation solution, S805 may be replaced with a process in which the blockchain node writes card data into the first node via a provisioning server.

S806: The first node stores the first service result.

For an implementation principle of S806, refer to related descriptions in S705. Details are not described herein again.

For technical effects of the communication method provided in FIG. 8, refer to technical effects of the method provided in FIG. 4. In addition, the address of the first identity service is an address of a website. The second node may obtain the service result based on the input information of the first attestation service, and provide, for the blockchain node or the first node, information indicating the service result. An existing manner of obtaining the service result may be used, that is, a service provider obtains the service result, so that dependency on the blockchain can be reduced, and an application scenario is more flexible.

FIG. 9 is a schematic flowchart 4 of a communication method according to an embodiment of this application. In a scenario shown in FIG. 9, a first node may be a terminal of a user, and a second node is an organization or a body that provides a subscription service, for example, a device corresponding to an operator. A service that the terminal needs to obtain is a subscription service, and an address of the subscription service is an address of a smart contract. In this case, the communication method shown in FIG. 9 includes the following steps.

S901: The first node obtains first information from a blockchain node.

The first information indicates information about the subscription service. For an implementation principle of the first information, refer to related descriptions in S401 in the method provided in FIG. 4. For an implementation principle of S901, refer to related descriptions in S401 in the method provided in FIG. 4. Details are not described herein again.

S902: The first node sends input information of the subscription service. Correspondingly, the blockchain node receives the input information of the subscription service.

For an implementation principle of the input information of the subscription service, refer to related descriptions in S702 in the method provided in FIG. 7. Details are not described herein again.

Optionally, in S902, the input information of the subscription service may further include third information, and the third information may include second attestation information and/or a first address of the first node. The second attestation information is a service result of a second attestation service, and is used to attest an attribute corresponding to the first node, for example, whether the user corresponding to the first node is over 18 years old, or a location of the first node. The first address is a storage address of the second attestation information on the blockchain node. For an implementation principle of the second attestation information, refer to an implementation principle of first attestation information. For an implementation principle of the first address, refer to an implementation principle of a second address. For an implementation principle of the second attestation service, refer to the implementation principle of the first attestation service. In addition, for an implementation principle of the service result of the second attestation service, refer to the service result of the first attestation service in the method provided in FIG. 7 or FIG. 8. It may be understood that the first node may obtain the service result of the second attestation service by using the method provided in FIG. 7 or FIG. 8. In the method provided in FIG. 9, the second attestation service may be the first attestation service, and the first address may be the second address.

In this way, an identity of the user can be confirmed based on the second attestation information, making a subscription process more secure.

The input information of the subscription service and the third information may be carried in a same message, or may be separately carried in different messages. This is not limited in embodiments of this application.

S903: The blockchain node verifies an identity of the first node based on the second attestation information.

In a possible implementation solution, the blockchain node may obtain attestation content and a signature from the second attestation information. The attestation content is a condition required by an attestation service, for example, the user corresponding to the first node completing real-name authentication, the user corresponding to the first node being over 18 years old, or the user corresponding to the first node being a legitimate citizen. The blockchain node may verify that the signature is issued by a real body or organization that performs attestation, and verify the attestation content.

In a possible implementation solution, the blockchain node may obtain the attestation content based on the first address, to verify the identity of the first node.

It may be understood that the second attestation information of the blockchain node may be from the first node, or may be obtained based on the first address of the first node.

It may be understood that S903 is an optional step.

S904: The blockchain node executes the smart contract corresponding to the subscription service and obtains a service result of the subscription service, namely, a second service result.

In other words, the second service result is obtained by inputting the input information of the subscription service into the smart contract of the subscription service.

In this embodiment of this application, the blockchain node may further store the second service result.

S905: The blockchain node provides the second service result for the second node.

In a possible implementation solution, if the blockchain node and the second node belong to a same merchant, for example, a communication network of the operator, the blockchain node may synchronize the second service result to the second node via an interaction interface between network elements in the same merchant.

In a possible implementation solution, if the blockchain node and the second node do not belong to a same merchant, the blockchain node may send the second service result to the second node via an information exchange interface between different merchants.

S906: The second node stores the second service result.

To be specific, the second node may store the second service result at a storage address that the second node can obtain, for example, in a memory of the second node.

S907: The second node sends the second service result to the first node.

In a possible implementation solution, S907 may further include: The second node sends the storage address of the second service result on the blockchain. Correspondingly, the first node receives the storage address of the second service result on the blockchain. That is, the second node further sends the storage address of the second service result on the blockchain to the first node.

In a possible implementation solution, S907 may be a process in which the second node writes card data into the first node via a provisioning server.

It may be understood that the storage address of the second service result on the blockchain and the second service result may be carried in a same message, or may be separately carried in different messages.

S908: The first node stores the second service result of the subscription service.

For an implementation principle of S908, refer to related descriptions in S705 in the method provided in FIG. 7.

For technical effects of the communication method provided in FIG. 9, refer to technical effects of the method provided in FIG. 4. In addition, because the smart contract is executed on the blockchain, an execution process of the smart contract can be verified. In this way, each blockchain node (or a blockchain node on which the smart contract is deployed) can verify the service result of the subscription service.

FIG. 10 is a schematic flowchart 5 of a communication method according to an embodiment of this application. In a scenario shown in FIG. 10, a first node may be a terminal of a user, a service that the first node needs to obtain is a subscription service, and an address of the subscription service is an address of a website, for example, a web (web) portal website. In this case, the second node may be a body or an organization that provides the subscription service, for example, a node corresponding to an operator. The communication method provided in this embodiment of this application may be shown in FIG. 10. As shown in FIG. 10, the communication method includes the following steps.

S1001: The first node obtains first information from a blockchain node.

The first information indicates information about the subscription service. For an implementation principle of the first information, refer to related descriptions in S401 in the method provided in FIG. 4. For an implementation principle of S1001, refer to related descriptions in S401 in the method provided in FIG. 4. Details are not described herein again.

S1002: The first node sends input information of the subscription service to the second node. Correspondingly, the second node receives the input information of the subscription service.

For an implementation principle of the input information of the subscription service, refer to related descriptions of the input information of the first attestation service in the method provided in FIG. 8. Details are not described herein again.

Optionally, in S1002, the input information of the subscription service may further include third information. For an implementation principle of the third information, refer to related descriptions in S902. Details are not described herein again.

S1003: The second node verifies an identity of the first node based on second attestation information.

For an implementation principle of S1003, refer to related descriptions in S903. A difference between S1003 and S903 lies in that S1003 is performed by the second node.

It may be understood that S1003 is an optional step.

S1004: The second node obtains a service result of the subscription service, namely, a second service result.

In a possible implementation solution, the second node may input the input information of the subscription service into the subscription service and obtains the second service result.

S1005: The second node stores the second service result.

For an implementation principle of S1005, refer to related descriptions in S906. Details are not described herein again.

S1006: The second node sends the second service result and/or a hash value of the second service result to the blockchain node.

It may be understood that the blockchain node may store the second service result and/or the hash value of the second service result.

In this way, the first node may obtain the first service result, the hash value of the first service result, or both that are stored on the blockchain node, and verify, based on the first service result, the hash value of the first service result, or both that are stored on the blockchain node, the service result received by the first node.

S1007: The second node sends the second service result to the first node.

It may be understood that S1007 may further include: The second node sends a third address. Correspondingly, the first node receives the third address. The third address is a storage address of the second service result on the blockchain or a storage address of the hash value of the second service result on the blockchain. That is, the second node sends the third address to the first node. The third address may be provided for the second node after the blockchain stores the second service result and/or the hash value of the first service result.

It may be understood that the third address and the first service result may be carried in a same message, or may be separately carried in different messages.

S1008: The first node stores the second service result of the subscription service.

For an implementation principle of S1008, refer to related descriptions in S806. Details are not described herein again.

For technical effects of the communication method provided in FIG. 10, refer to technical effects of the method provided in FIG. 4. In addition, an address of the first identity service is an address of a website. The second node may obtain the service result based on the input information of the subscription service, and provide, for the blockchain node or the first node, information indicating the service result. An existing manner of obtaining the service result may be used, that is, a service provider obtains the service result, so that dependency on the blockchain can be reduced, and an application scenario is more flexible.

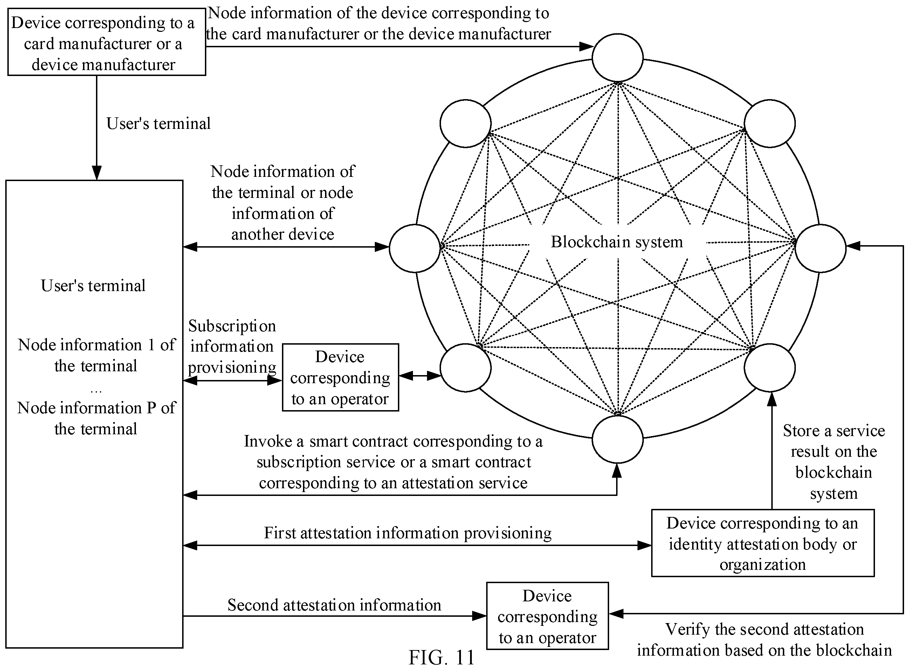

For a relationship between an information flow direction and a blockchain node in a blockchain system in the method provided in this embodiment of this application, refer to FIG. 11. A device corresponding to a card manufacturer or a device manufacturer may provide, for the blockchain node, node information of the device corresponding to the card manufacturer and the device manufacturer. The card manufacturer or the device manufacturer may further provide node information of a terminal for the first node, for example, the terminal of the user, or the terminal may generate node information of the terminal. The terminal may include one or more pieces of node information, for example, node information 1 of the terminal to node information P of the terminal. The terminal and the blockchain node may exchange each other's node information or node information of another device. The terminal may invoke a smart contract corresponding to the subscription service or a smart contract corresponding to the attestation service (for example, the first attestation service or a second attestation service) and obtain a corresponding service result, for example, the first service result. Alternatively, the terminal may obtain a result (not shown in FIG. 11) of the subscription service from the operator, or obtain first attestation information from a device corresponding to a certification body or organization. In this case, the device corresponding to a certification body or organization may store the service result of the attestation service in the blockchain, and the device corresponding to a certification body or organization may further write the attestation information of the attestation service result, for example, the first attestation information, into a card in a provisioning manner. After obtaining the subscription result of the terminal, the blockchain system may write the subscription information of the subscription result into the terminal via a device corresponding to an operator or an over-the-air provisioning server. In addition, the terminal may provide attestation information, for example, the second attestation information, for another device, for example, the device corresponding to an operator, and the another device may verify the attestation information based on the blockchain.

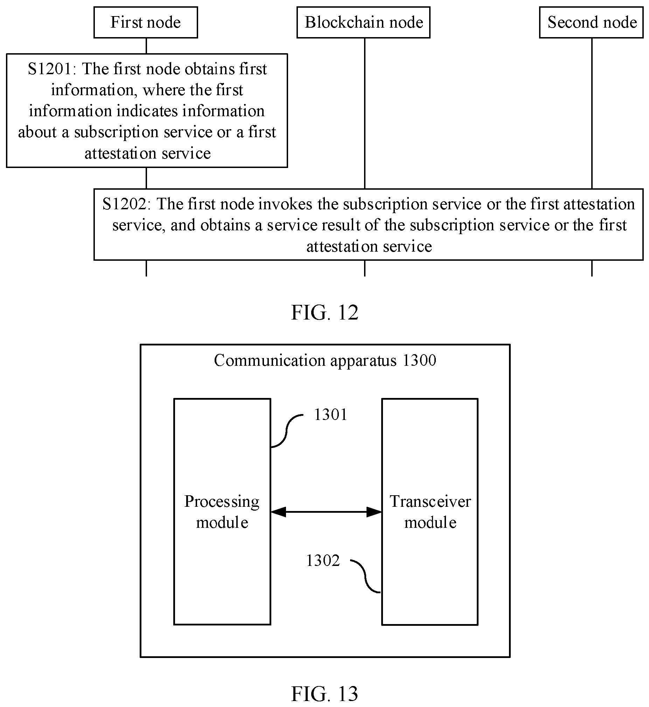

FIG. 12 is a schematic flowchart 6 of a communication method according to an embodiment of this application. As shown in FIG. 12, a first node stores information about a service that the node needs to obtain, for example, an address of a smart contract. In this case, the communication method provided in FIG. 12 may include the following steps.

S1201: The first node obtains first information. The first information indicates an address of a smart contract of a subscription service or a first attestation service.

Specifically, the first node obtains the locally stored first information, or obtains the first information from another node.

For the subscription service or the first attestation service, refer to related descriptions in S401. Details are not described herein again.

In a possible implementation solution, the first node may obtain the first information from a memory of the first node. In other words, the first node stores the first information.

S1202: The first node invokes the subscription service or the first attestation service based on the address of the smart contract and obtains a service result of the subscription service or the first attestation service.

For an implementation principle of S1202, refer to related descriptions in S402. Details are not described herein again.

Based on the communication method provided in FIG. 12, the first node can invoke the locally stored address of the smart contract of the subscription service or the first attestation service. In this way, the first node can invoke the subscription service or the first attestation service based on the first information and obtain the service result. In other words, the first node can obtain information about services of different operators or bodies via the blockchain, preventing a user from directly contacting an entity of an operator or a certification body or organization, thereby simplifying a procedure of using a service of the operator or the certification body or organization by the user.

In addition, storing the first information locally by the first node can further reduce an interaction procedure and improve communication efficiency.

The foregoing describes in detail, with reference to FIG. 4 to FIG. 12, the communication methods provided in embodiments of this application. The following describes a communication apparatus configured to perform the communication method provided in embodiments of this application.

For example, FIG. 13 is a diagram 1 of a structure of a communication apparatus 1300 according to an embodiment of this application. As shown in FIG. 13, the communication apparatus 1300 includes a processing module 1301 and a transceiver module 1302. For ease of description, FIG. 13 shows only main components of the communication apparatus 1300.

In some embodiments, the communication apparatus 1300 may be used in the communication system shown in FIG. 3, and perform the function of the first node in the communication method shown in FIG. 10 or any one of FIG. 4 to FIG. 9.

The processing module 1301 is configured to obtain first information from a blockchain node. The first information indicates information about a subscription service or a first attestation service. The processing module 1301 is further configured to invoke the subscription service or the first attestation service via the transceiver module 1302 and obtain a service result of the subscription service or the first attestation service.

In a possible implementation solution, the first information includes an address of the subscription service or the first attestation service.

In a possible implementation solution, the address of the subscription service or the first attestation service may be an address of a smart contract. The processing module 1301 is further configured to: send, based on the address of the smart contract, input information of the subscription service or the first attestation service to the blockchain node via the transceiver module 1302, and receive the service result of the subscription service or the first attestation service from a second node or the blockchain node. The service result of the subscription service or the first attestation service is obtained by inputting the input information of the subscription service or the first attestation service into the smart contract of the subscription service or the first attestation service.

In a possible implementation solution, the address of the subscription service or the first attestation service is an address of a website. The processing module 1301 sends input information of the subscription service or the first attestation service to a second node based on the address of the website, and receives the service result of the subscription service or the first attestation service from the second node. The service result of the subscription service or the first attestation service is obtained by inputting the input information of the subscription service or the first attestation service into a smart contract of the subscription service or the first attestation service.

In a possible implementation solution, the input information of the subscription service or the first attestation service includes information indicating an identifier of the first node.

In a possible implementation solution, if the first information is information indicating a subscription service, the input information of the subscription service may further include second attestation information of the first node or a first address, where the second attestation information is a service result of a second attestation service, and the first address is a storage address of the second attestation information on the blockchain node.

In a possible implementation solution, the service result of the subscription service or the first attestation service may include a correspondence between subscription information and the identifier of the first node or a correspondence between first attestation information and the identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

In a possible implementation solution, the first node stores information about a query contract, and the processing module 1301 is further configured to obtain the first information from the blockchain node based on the information about the query contract.

In a possible implementation solution, the information about the query contract may include an address of the query contract.

In a possible implementation solution, the blockchain node is a network element in a telecommunication network.

Optionally, the transceiver module 1302 may include a receiving module and a sending module (not shown in FIG. 13). The transceiver module 1302 is configured to implement a sending function and a receiving function of the communication apparatus 1300.

Optionally, the communication apparatus 1300 may further include a storage module (not shown in FIG. 13), and the storage module stores a program or instructions. When the processing module 1301 executes the program or the instructions, the communication apparatus 1300 is enabled to perform the function of the first node in the communication method shown in FIG. 10 or any one of FIG. 4 to FIG. 9.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

It should be noted that the communication apparatus 1300 may be a terminal device or a network device, may be a chip (system) or another part or component that may be disposed in a terminal device or a network device, or may be an apparatus that includes a terminal device or a network device. This is not limited in this application.

In addition, for technical effects of the communication apparatus 1300, refer to the technical effects of the communication method shown in FIG. 10 or any one of FIG. 4 to FIG. 9. Details are not described herein again.

In some other embodiments, the communication apparatus 1300 may be used in the communication system shown in FIG. 3, and perform the function of the blockchain node in the communication method shown in FIG. 10 or any one of FIG. 4 to FIG. 9.

The processing module 1301 is configured to obtain first information. The first information indicates information about a subscription service or a first attestation service. The processing module 1301 is further configured to provide the first information to a first node via the transceiver module 1302.

In a possible implementation solution, the first information may include an address of the subscription service or the first attestation service.

In a possible implementation solution, a smart contract of the subscription service or the first attestation service is deployed on the blockchain node, and the address of the subscription service or the first attestation service is an address of the smart contract.

In a possible implementation solution, the transceiver module 1302 is further configured to receive input information of the subscription service or the first attestation service from the first node, and the processing module 1301 is further configured to obtain a service result of the subscription service or the first attestation service. The service result of the subscription service or the first attestation service is obtained by inputting the input information of the subscription service or the first attestation service into the smart contract of the subscription service or the first attestation service. The transceiver module 1302 is further configured to provide the service result of the subscription service or the first attestation service to a second node.

In a possible implementation solution, the input information of the subscription service or the first attestation service includes information indicating an identifier of the first node.

In a possible implementation solution, if the first information is information indicating a subscription service, the input information of the subscription service may further include second attestation information of the first node or a first address, where the second attestation information is a service result of a second attestation service, and the first address is a storage address of the second attestation information on the blockchain node.

In a possible implementation solution, the service result of the subscription service may include a correspondence between subscription information and the identifier of the first node or a correspondence between first attestation information and the identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

In a possible implementation solution, the address of the subscription service or the first attestation service is an address of a website, and the transceiver module 1302 is further configured to receive a service result of the subscription service or the first attestation service and/or a hash value of the service result of the subscription service or the first attestation service.

In a possible implementation solution, the blockchain node is a network element in a telecommunication network.

Optionally, the transceiver module 1302 may include a receiving module and a sending module (not shown in FIG. 13). The transceiver module 1302 is configured to implement a sending function and a receiving function of the communication apparatus 1300.

Optionally, the communication apparatus 1300 may further include a storage module (not shown in FIG. 13), and the storage module stores a program or instructions. When the processing module 1301 executes the program or the instructions, the communication apparatus 1300 is enabled to perform the function of the blockchain node in the communication method shown in FIG. 10 or any one of FIG. 4 to FIG. 9.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

It should be noted that the communication apparatus 1300 may be a terminal device or a network device, may be a chip (system) or another part or component that may be disposed in a terminal device or a network device, or may be an apparatus that includes a terminal device or a network device. This is not limited in this application.

In addition, for technical effects of the communication apparatus 1300, refer to the technical effects of the communication method shown in FIG. 10 or any one of FIG. 4 to FIG. 9. Details are not described herein again.

In some other embodiments, the communication apparatus 1300 may be used in the communication system shown in FIG. 3, and perform the function of the second node in the communication method shown in any one of FIG. 4, FIG. 7, or FIG. 9.

The transceiver module 1302 is configured to receive a service result of a subscription service or a first attestation service from a blockchain node. The processing module 1301 is configured to send the service result of the subscription service or the first attestation service to a first node.

In a possible implementation solution, the service result of the subscription service or the first attestation service may include a correspondence between subscription information and an identifier of the first node or a correspondence between first attestation information and an identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

Optionally, the transceiver module 1302 may include a receiving module and a sending module (not shown in FIG. 13). The transceiver module 1302 is configured to implement a sending function and a receiving function of the communication apparatus 1300.

Optionally, the communication apparatus 1300 may further include a storage module (not shown in FIG. 13), and the storage module stores a program or instructions. When the processing module 1301 executes the program or the instructions, the communication apparatus 1300 is enabled to perform the function of the second node in the communication method shown in FIG. 4, FIG. 7, or FIG. 9.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

It should be noted that the communication apparatus 1300 may be a network device, may be a chip (system) or another part or component that can be disposed in a network device, or may be an apparatus that includes a network device. This is not limited in this application.

In addition, for technical effects of the communication apparatus 1300, refer to the technical effects of the communication method shown in any one of FIG. 4, FIG. 7, or FIG. 9. Details are not described herein again.

In some other embodiments, the communication apparatus 1300 may be used in the communication system shown in FIG. 3, and perform the function of the second node in the communication method shown in FIG. 4, FIG. 8, or FIG. 10.

The transceiver module 1302 is configured to receive input information of a subscription service or a first attestation service. The processing module 1301 is configured to obtain a service result of the subscription service or the first attestation service based on the input information of the subscription service or the first attestation service. The transceiver module 1302 is configured to send the service result of the subscription service or the first attestation service or the subscription service and/or a hash value of the service result of the first attestation service to a blockchain node, and/or provide the service result of the subscription service or the first attestation service to a first node.

In a possible implementation solution, the service result of the subscription service or the first attestation service may include a correspondence between subscription information and an identifier of the first node or a correspondence between first attestation information and an identifier of the first node, the subscription information indicates a service that the first node has subscribed to, and the first attestation information is used to attest an identity of the first node.

In a possible implementation solution, the identifier of the first node may include a first type of identifier of the first node or a subscription permanent identifier of the first node, and the first type of identifier indicates an identity of a user or the first type of identifier corresponds to an attribute of a user.

In a possible implementation solution, the blockchain node is a network element in a telecommunication network.

Optionally, the transceiver module 1302 may include a receiving module and a sending module (not shown in FIG. 13). The transceiver module 1302 is configured to implement a sending function and a receiving function of the communication apparatus 1300.

Optionally, the communication apparatus 1300 may further include a storage module (not shown in FIG. 13), and the storage module stores a program or instructions. When the processing module 1301 executes the program or the instructions, the communication apparatus 1300 is enabled to perform the function of the second node in the communication method shown in FIG. 4, FIG. 8, or FIG. 10.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

It should be noted that the communication apparatus 1300 may be a network device, may be a chip (system) or another part or component that can be disposed in a network device, or may be an apparatus that includes a network device. This is not limited in this application.

In addition, for technical effects of the communication apparatus 1300, refer to the technical effects of the communication method shown in any one of FIG. 4, FIG. 8, or FIG. 10. Details are not described herein again.

In some other embodiments, the communication apparatus 1300 may be used in the communication system shown in FIG. 3, and perform the function of the first node in the communication method shown in FIG. 12.

The processing module 1301 is configured to obtain first information. The first information indicates an address of a smart contract of a subscription service or a first attestation service. The processing module 1301 is further configured to invoke the subscription service or the first attestation service based on the address of the smart contract and obtain a service result of the subscription service or the first attestation service via the transceiver module 1302.

In a possible implementation solution, the first node stores the first information.

In a possible implementation solution, the processing module 1301 is further configured to send input information of the subscription service or the first attestation service to a blockchain node based on the address of the smart contract.

In a possible implementation solution, the processing module 1301 is further configured to receive, via the transceiver module 1302, the service result of the subscription service or the first attestation service from a second node or the blockchain node, where the service result of the subscription service or the first attestation service is obtained by inputting the input information of the subscription service or the first attestation service into the smart contract of the subscription service or the first attestation service.

In a possible implementation solution, the input information of the subscription service or the first attestation service includes information indicating an identifier of the first node.

In a possible implementation solution, if the first information is information indicating a subscription service, the input information of the subscription service further includes second attestation information of the first node or a first address, where the second attestation information is a service result of a second attestation service, and the first address is a storage address of the second attestation information on the blockchain node.

In a possible implementation solution, the service result of the subscription service or the first attestation service includes a correspondence between subscription information and the identifier of the first node or a correspondence between first attestation information and the identifier of the first node, the subscription information indicates a service that the first node has subscribed to, and the first attestation information is used to attest an identity of the first node.

In a possible implementation solution, the blockchain node is a network element in a telecommunication network.

Optionally, the transceiver module 1302 may include a receiving module and a sending module (not shown in FIG. 13). The transceiver module 1302 is configured to implement a sending function and a receiving function of the communication apparatus 1300.

Optionally, the communication apparatus 1300 may further include a storage module (not shown in FIG. 13), and the storage module stores a program or instructions. When the processing module 1301 executes the program or the instructions, the communication apparatus 1300 is enabled to perform the function of the first node in the communication method shown in FIG. 12.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

It should be noted that the communication apparatus 1300 may be a terminal device or a network device, may be a chip (system) or another part or component that may be disposed in a terminal device or a network device, or may be an apparatus that includes a terminal device or a network device. This is not limited in this application.

In addition, for technical effects of the communication apparatus 1300, refer to the technical effects of the communication method shown in FIG. 12. Details are not described herein again.

In some other embodiments, the communication apparatus 1300 may be used in the communication system shown in FIG. 3, and perform the function of the blockchain node in the communication method shown in FIG. 12.

The transceiver module 1302 is configured to receive input information of a subscription service or a first attestation service. The processing module 1301 is configured to execute a smart contract of the subscription service or the first attestation service based on the input information of the subscription service or the first attestation service and obtain a service result of the subscription service or the first attestation service. The transceiver module 1302 is further configured to provide the service result of the subscription service or the first attestation service to a first node.

In a possible implementation solution, if the input information of the subscription service or the first attestation service is the input information of the subscription service, the input information of the subscription service further includes second attestation information of the first node or a first address, where the second attestation information is a service result of a second attestation service, and the first address is a storage address of the second attestation information on the blockchain node.

In a possible implementation solution, the service result of the subscription service or the first attestation service includes a correspondence between subscription information and an identifier of the first node or a correspondence between first attestation information and an identifier of the first node, the subscription information indicates a service that the first node has subscribed to, and the first attestation information is used to attest an identity of the first node.

In a possible implementation solution, the processing module 1301 is further configured to provide a service result of the subscription service or the first attestation service to a second node.

In a possible implementation solution, the blockchain node is a network element in a telecommunication network.

Optionally, the transceiver module 1302 may include a receiving module and a sending module (not shown in FIG. 13). The transceiver module 1302 is configured to implement a sending function and a receiving function of the communication apparatus 1300.

Optionally, the communication apparatus 1300 may further include a storage module (not shown in FIG. 13), and the storage module stores a program or instructions. When the processing module 1301 executes the program or the instructions, the communication apparatus 1300 is enabled to perform the function of the blockchain node in the communication method shown in FIG. 12.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

It should be noted that the communication apparatus 1300 may be a terminal device or a network device, may be a chip (system) or another part or component that may be disposed in a terminal device or a network device, or may be an apparatus that includes a terminal device or a network device. This is not limited in this application.

In addition, for technical effects of the communication apparatus 1300, refer to the technical effects of the communication method shown in FIG. 12. Details are not described herein again.

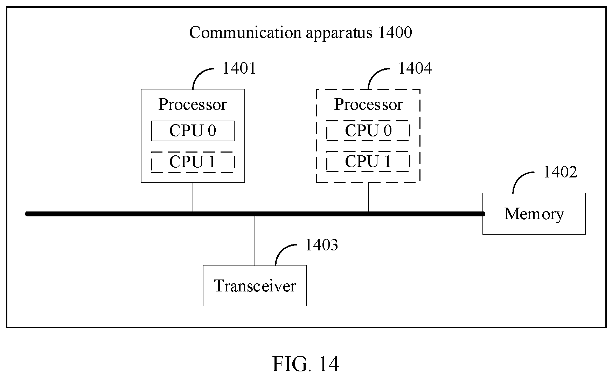

For example, FIG. 14 is a diagram of a structure of a communication apparatus according to an embodiment of this application. The communication apparatus may be a terminal device or a network device, or may be a chip (system) or another part or component that may be disposed in the terminal device or the network device. As shown in FIG. 14, the communication apparatus 1400 may include a processor 1401. Optionally, the communication apparatus 1400 may further include a memory 1402 and/or a transceiver 1403. The processor 1401 is coupled to the memory 1402 and the transceiver 1403, for example, may be connected to the memory 1402 and the transceiver 1403 through a communication bus.

The following specifically describes the components of the communication apparatus 1400 with reference to FIG. 14.

The processor 1401 is a control center of the communication apparatus 1400, and may be one processor, or may be a general term of a plurality of processing elements. For example, the processor 1401 is one or more central processing units (central processing units, CPUs) or an application-specific integrated circuit (application-specific integrated circuit, ASIC), or is configured as one or more integrated circuits for implementing embodiments of this application, for example, one or more digital signal processors (digital signal processors, DSPs) or one or more field programmable gate arrays (field programmable gate arrays, FPGAs).

Optionally, the processor 1401 may perform various functions of the communication apparatus 1400 by running or executing a software program stored in the memory 1402 and invoking data stored in the memory 1402.

During specific implementation, in an embodiment, the processor 1401 may include one or more CPUs, for example, a CPU 0 and a CPU 1 in FIG. 14.

During specific implementation, in an embodiment, the communication apparatus 1400 may include a plurality of processors, for example, the processor 1401 and a processor 1404 shown in FIG. 14. Each of the processors may be a single-core processor (single-CPU), or may be a multicore processor (multi-CPU). The processor herein may be one or more devices, circuits, and/or processing cores configured to process data (for example, computer program instructions).

The memory 1402 is configured to store the software program for performing the solutions of this application, and the processor 1401 controls the execution. For a specific implementation, refer to the foregoing method embodiments. Details are not described herein.

Optionally, the memory 1402 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used for carrying or storing expected program code in a form of instructions or a data structure and can be accessed by a computer, but is not limited thereto. The memory 1402 may be integrated with the processor 1401, or may exist independently, and is coupled to the processor 1401 through an interface circuit (not shown in FIG. 14) of the communication apparatus 1400. This is not specifically limited in embodiments of this application.

The transceiver 1403 is configured to communicate with another communication apparatus. For example, the communication apparatus 1400 is a terminal device, and the transceiver 1403 may be configured to communicate with a network device or communicate with another terminal device. For another example, the communication apparatus 1400 is a network device, and the transceiver 1403 may be configured to communicate with a terminal device or communicate with another network device.

Optionally, the transceiver 1403 may include a receiver and a transmitter (not separately shown in FIG. 14). The receiver is configured to implement a receiving function, and the transmitter is configured to implement a sending function.

Optionally, the transceiver 1403 may be integrated with the processor 1401, or may exist independently, and is coupled to the processor 1401 through an interface circuit (not shown in FIG. 14) of the communication apparatus 1400. This is not specifically limited in embodiments of this application.

It should be noted that the structure of the communication apparatus 1400 shown in FIG. 14 does not constitute a limitation on the communication apparatus. An actual communication apparatus may include more or fewer components than those shown in the figure, or a combination of some components, or a different component layout.

In addition, for technical effects of the communication apparatus 1400, refer to the technical effects of the communication method in the foregoing method embodiments. Details are not described herein again.

An embodiment of this application provides a communication system. The communication system includes the foregoing one or more terminal devices and one or more network devices.

It should be understood that the processor in embodiments of this application may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be understood that the memory in embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually represents an "or" relationship between the associated objects, but may represent an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components shown as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a compute device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first node, wherein the method comprises:
obtaining first information from a blockchain node, wherein the first information indicates information about a subscription service or a first attestation service; and
invoking the subscription service or the first attestation service, and obtaining a service result of the subscription service or the first attestation service.

2. The method according to claim 1, wherein the first information comprises an address of the subscription service or the first attestation service.

3. The method according to claim 2, wherein the address of the subscription service or the first attestation service is an address of a smart contract;
invoking the subscription service or the first attestation service comprises:
sending input information of the subscription service or the first attestation service to the blockchain node based on the address of the smart contract; and
obtaining the service result of the subscription service or the first attestation service comprises:
receiving the service result of the subscription service or the first attestation service from a second node or the blockchain node, wherein the service result of the subscription service or the first attestation service is obtained by inputting the input information of the subscription service or the first attestation service into the smart contract of the subscription service or the first attestation service.

4. The method according to claim 2, wherein the address of the subscription service or the first attestation service is an address of a website;
invoking the subscription service or the first attestation service comprises:
sending input information of the subscription service or the first attestation service to a second node based on the address of the website; and
obtaining the service result of the subscription service or the first attestation service comprises:
receiving the service result of the subscription service or the first attestation service from the second node, wherein the service result of the subscription service or the first attestation service is obtained by inputting the input information of the subscription service or the first attestation service into the subscription service or the first attestation service.

5. The method according to claim 3 or 4, wherein the input information of the subscription service or the first attestation service comprises information indicating an identifier of the first node.

6. The method according to any one of claims 3 to 5, wherein if the first information is information indicating a subscription service, the input information of the subscription service further comprises second attestation information of the first node or a first address, wherein the second attestation information is a service result of a second attestation service, and the first address is a storage address of the second attestation information on the blockchain node.

7. The method according to any one of claims 1 to 6, wherein the service result of the subscription service or the first attestation service comprises a correspondence between subscription information and the identifier of the first node or a correspondence between first attestation information and the identifier of the first node, the subscription information indicates a service that the first node has subscribed to, and the first attestation information is used to attest an identity of the first node.

8. The method according to claim 7, wherein the identifier of the first node comprises a first type of identifier of the first node or a subscription permanent identifier of the first node, and the first type of identifier indicates an identity of a user or the first type of identifier corresponds to an attribute of a user.

9. The method according to any one of claims 1 to 8, wherein the first node stores information about a query contract, and obtaining the first information from the blockchain node comprises:
obtaining the first information from the blockchain node based on the information about the query contract.

10. The method according to claim 9, wherein the information about the query contract comprises an address of the query contract.

11. The method according to any one of claims 1 to 10, wherein the blockchain node is a network element in a telecommunication network.

12. A communication method, applied to a blockchain node, wherein the method comprises:
obtaining first information, wherein the first information indicates information about a subscription service or a first attestation service; and
providing the first information to a first node.

13. The method according to claim 12, wherein the first information comprises an address of the subscription service or the first attestation service.

14. The method according to claim 13, wherein a smart contract of the subscription service or the first attestation service is deployed on the blockchain node, and the address of the subscription service or the first attestation service is an address of the smart contract.

15. The method according to claim 14, wherein the method further comprises:
receiving input information of the subscription service or the first attestation service from the first node; and
obtaining a service result of the subscription service or the first attestation service, wherein the service result of the subscription service or the first attestation service is obtained by inputting the input information of the subscription service or the first attestation service into the subscription service or the first attestation service.

16. The method according to claim 15, wherein the method further comprises: providing the service result of the subscription service or the first attestation service to a second node.

17. The method according to claim 15 or 16, wherein the input information of the subscription service or the first attestation service comprises information indicating an identifier of the first node.

18. The method according to claim 17, wherein if the first information is information indicating a subscription service, the input information of the subscription service further comprises second attestation information of the first node or a first address, wherein the second attestation information is a service result of a second attestation service, and the first address is a storage address of the second attestation information on the blockchain node.

19. The method according to any one of claims 15 to 18, wherein the service result of the subscription service or the first attestation service comprises a correspondence between subscription information and the identifier of the first node or a correspondence between first attestation information and the identifier of the first node, the subscription information indicates a service that the first node has subscribed to, and the first attestation information is used to attest an identity of the first node.

20. The method according to claim 19, wherein the identifier of the first node comprises a first type of identifier of the first node or a subscription permanent identifier of the first node, and the first type of identifier indicates an identity of a user or the first type of identifier corresponds to an attribute of a user.

21. The method according to claim 13, wherein the address of the subscription service or the first attestation service is an address of a website; and the method further comprises:
receiving a service result of the subscription service or the first attestation service and/or a hash value of the service result of the subscription service or the first attestation service.

22. The method according to any one of claims 12 to 21, wherein the blockchain node is a network element in a telecommunication network.

23. A communication method, applied to a second node, wherein the method comprises:
receiving a service result of a subscription service or a first attestation service from a blockchain node, and storing the service result of the subscription service or the first attestation service; and
sending the service result of the subscription service or the first attestation service to a first node.

24. The method according to claim 23, wherein the service result of the subscription service or the first attestation service comprises a correspondence between subscription information and an identifier of the first node or a correspondence between first attestation information and an identifier of the first node, the subscription information indicates a service that the first node has subscribed to, and the first attestation information is used to attest an identity of the first node.

25. The method according to claim 24, wherein the identifier of the first node comprises a first type of identifier of the first node or a subscription permanent identifier of the first node, and the first type of identifier indicates an identity of a user or the first type of identifier corresponds to an attribute of a user.

26. A communication method, applied to a second node, wherein the method comprises:
receiving input information of a subscription service or a first attestation service;
obtaining a service result of the subscription service or the first attestation service based on the input information of the subscription service or the first attestation service;
sending the service result of the subscription service or the first attestation service and/or a hash value of the service result of the subscription service or the first attestation service to a blockchain node; and/or
sending the service result of the subscription service or the first attestation service to a first node.

27. The method according to claim 26, wherein the service result of the subscription service or the first attestation service comprises a correspondence between subscription information and an identifier of the first node or a correspondence between first attestation information and an identifier of the first node, the subscription information indicates a service that the first node has subscribed to, and the first attestation information is used to attest an identity of the first node.

28. The method according to claim 27, wherein the identifier of the first node comprises a first type of identifier of the first node or a subscription permanent identifier of the first node, and the first type of identifier indicates an identity of a user or the first type of identifier corresponds to an attribute of a user.

29. The method according to any one of claims 26 to 28, wherein the blockchain node is a network element in a telecommunication network.

30. A communication method, applied to a first node, wherein the method comprises:
obtaining first information, wherein the first information indicates an address of a smart contract of a subscription service or a first attestation service; and
invoking the subscription service or the first attestation service based on the address of the smart contract, and obtaining a service result of the subscription service or the first attestation service.

31. The method according to claim 30, wherein the first node stores the first information.

32. The method according to claim 30 or 31, wherein invoking the subscription service or the first attestation service based on the address of the smart contract comprises:
sending input information of the subscription service or the first attestation service to a blockchain node based on the address of the smart contract.

33. The method according to claim 32, wherein obtaining the service result of the subscription service or the first attestation service comprises:
receiving the service result of the subscription service or the first attestation service from a second node or the blockchain node, wherein the service result of the subscription service or the first attestation service is obtained by inputting the input information of the subscription service or the first attestation service into the smart contract of the subscription service or the first attestation service.

34. The method according to claim 32 or 33, wherein the input information of the subscription service or the first attestation service comprises information indicating an identifier of the first node.

35. The method according to claim 34, wherein if the first information is information indicating a subscription service, the input information of the subscription service further comprises second attestation information of the first node or a first address, wherein the second attestation information is a service result of a second attestation service, and the first address is a storage address of the second attestation information on the blockchain node.

36. The method according to any one of claims 30 to 35, wherein the service result of the subscription service or the first attestation service comprises a correspondence between subscription information and the identifier of the first node or a correspondence between first attestation information and the identifier of the first node, the subscription information indicates a service that the first node has subscribed to, and the first attestation information is used to attest an identity of the first node.

37. The method according to any one of claims 32 to 35, wherein the blockchain node is a network element in a telecommunication network.

38. A communication method, applied to a blockchain node, wherein the method comprises:
receiving input information of a subscription service or a first attestation service;
executing a smart contract of the subscription service or the first attestation service based on the input information of the subscription service or the first attestation service, and obtaining a service result of the subscription service or the first attestation service; and
providing the service result of the subscription service or the first attestation service to a first node.

39. The method according to claim 38, wherein if the input information of the subscription service or the first attestation service is the input information of the subscription service, the input information of the subscription service further comprises second attestation information of the first node or a first address, wherein the second attestation information is a service result of a second attestation service, and the first address is a storage address of the second attestation information on the blockchain node.

40. The method according to claim 38 or 39, wherein the service result of the subscription service or the first attestation service comprises a correspondence between subscription information and an identifier of the first node or a correspondence between first attestation information and an identifier of the first node, the subscription information indicates a service that the first node has subscribed to, and the first attestation information is used to attest an identity of the first node.

41. The method according to any one of claims 38 to 40, wherein the method further comprises:
providing a service result of the subscription service or the first attestation service to a second node.

42. The method according to any one of claims 38 to 41, wherein the blockchain node is a network element in a telecommunication network.

43. A communication apparatus, wherein the communication apparatus is configured to perform the communication method according to any one of claims 1 to 42.

44. A communication apparatus, comprising a processor, wherein the processor is configured to perform the communication method according to any one of claims 1 to 42.

45. A communication apparatus, comprising a processor, wherein the processor is coupled to a memory; and
the processor is configured to execute a computer program stored in the memory, to enable the communication apparatus to perform the communication method according to any one of claims 1 to 42.

46. A communication apparatus, comprising a processor and an interface circuit, wherein
the interface circuit is configured to: receive code instructions and transmit the code instructions to the processor; and
the processor is configured to run the code instructions to perform the method according to any one of claims 1 to 42.

47. A communication apparatus, wherein the communication apparatus comprises a processor and a transceiver, the transceiver is configured to exchange information between the communication apparatus and another communication apparatus, and the processor executes program instructions to perform the communication method according to any one of claims 1 to 42.

48. A communication system, wherein the communication system comprises one or more first nodes, one or more blockchain nodes, and one or more second nodes, the one or more first nodes are configured to perform the method according to any one of claims 1 to 11 or any one of claims 30 to 37, the one or more blockchain nodes are configured to perform the method according to any one of claims 12 to 22 or any one of claims 38 to 42; and the one or more second nodes are configured to perform the method according to any one of claims 23 to 29.

49. A computer-readable storage medium, wherein the computer-readable storage medium comprises a computer program or instructions; and when the computer program or the instructions are run on a computer, the computer is enabled to perform the communication method according to any one of claims 1 to 42.

50. A computer program product, wherein the computer program product comprises a computer program or instructions; and when the computer program or the instructions are run on a computer, the computer is enabled to perform the communication method according to any one of claims 1 to 42.
